# EUROPEAN PATENT SPECIFICATION

(11) **EP 4 068 649 B1**
(45) Date of publication and mention of the grant of the patent: **10.04.2024**
(21) Application number: 22150199.2
(22) Date of filing: 04.01.2022
(51) Int. Cl.: H04B 7/185, H04W 52/02, G06F 1/3206, G06F 1/3234, H04W 48/18, H04W 4/021

(54) **CONNECTING WIRELESS DEVICE TO CELLULAR NETWORK AFTER AIR TRANSPORTATION**
VERBINDEN EINER DRAHTLOSEN VORRICHTUNG MIT EINEM ZELLULAREN NETZ NACH EINEM LUFTTRANSPORT
DISPOSITIF SANS FIL DE CONNEXION À UN RÉSEAU CELLULAIRE APRÈS TRANSPORT D'AIR

(30) Priority: 29.03.2021 SE 2150383
(43) Date of publication of application: 05.10.2022
(73) Proprietor: Sony Group Corporation, Tokyo 108-0075 (JP); Sony Network Communications Europe B.V., 2132LS Hoofddorp (NL)
(72) Inventor: FÄNGE, Thomas, Basingstoke, RG22 4SB (GB); FALK, Mattias, Basingstoke, RG22 4SB (GB); TILLGREN, Magnus, Basingstoke, RG22 4SB (GB); SUNDSTRÖM, Henrik, Basingstoke, RG22 4SB (GB)
(74) Representative: Neij & Lindberg AB

(56) References cited:
- US-A- 6 154 636
- US-B1- 9 572 080
- US-B1- 10 629 067

## Description

### Technical Field

The present disclosure relates to functions in wireless devices and, in particular, techniques for enabling a wireless device to automatically connect to a cellular network after being transported by an aircraft.

### Background

Airlines generally prohibit the use of equipment that transmits radio-frequency (RF) signals, such as cellular transmission signals, at least during takeoff and landing to avoid interference with flight navigation systems. It has been proposed to provide wireless devices with an autonomous function that automatically enables/disables cellular communication capability upon detection of specific aircraft flight events such as takeoff or landing. This function may be used in wireless trackers that are attached or otherwise associated with cargo and configured to transmit position data by cellular communication for tracking the cargo in transit.

Typically, the wireless device stores connection data for a default cellular network (also referred to as a home network). However, after air transportation, the wireless device may be unable to connect to the default cellular network, for example if the wireless device has been transported between countries or continents that apply different radio access technologies and/or radio frequency bands. In this event, the wireless device starts a scan procedure in which each supported channel of each supported radio access technology is scanned to identify a cellular network with which to communicate. This is often referred to as a "full band scan" or "full scan". Full band scanning may take up to several minutes to complete scanning of each supported channel. Further, full band scanning is power consuming and may drain the power source of the wireless device faster than expected.

The prior art comprises US8675680 which describes a technique of pre-configuring a wireless device with configuration settings of the destination when a user checks in at an airport, by the user bringing the wireless device into range of a network configuration adaptor, which provides the configuration settings to the wireless device based on the itinerary of the user's upcoming flight. This approach requires significant system integration and may raise integrity concerns. Further, it requires manual intervention, which is undesirable when the wireless device is a wireless tracker.

The prior art further comprises US9572080, which discloses a vehicle communication system with a radio communication device. The vehicle communication system is configured to receive time correlated trajectory data for a planned route for a vehicle, predict vehicle attitude at a plurality of route positions, and generate a blockage schedule of predicted signal blockages of channels utilized by the radio communication device based on predicted vehicle attitude. The radio communication device is configured to transfer between channels at predetermined positions along the route based on the blockage schedule.

### Summary

It is an objective to at least partly overcome one or more limitations of the prior art.

A further objective is to improve the ability of a wireless device to connect to a cellular network after air transportation.

Another objective is to reduce the power consumption of a wireless device after air transportation.

Yet another objective is to achieve the foregoing with minimum or no need for manual intervention.

One or more of these objectives, as well as further objectives that may appear from the description below, are at least partly achieved by a wireless device, a method and a computer-readable medium according to the independent claims, embodiments thereof being defined by the dependent claims.

The invention is set out in the appended set of claims.

Still other objectives, aspects, and technical effects, as well as features and embodiments will appear from the following detailed description, the attached claims and the drawings.

### Brief Description of Drawings

Embodiments will now be described in more detail with reference to the accompanying schematic drawings.
FIG. 1 illustrates a wireless device during transport by an aircraft from one airport to another.
FIG. 2A is a block diagram of an example wireless device, and FIG. 2B is a flow chart of an example method of automatically disabling and enabling a wireless device for cellular communication during air transportation.
FIG. 3A is a flowchart of an example method of preparing a wireless device for connection to a cellular network after air transportation, FIG. 3B is a flowchart of an example method of operating a wireless device by use of the example method in FIG. 3A, and FIG. 3C is a timing diagram of operations given by the example method in FIG. 3B.
FIG. 4A is a block diagram of the wireless device of FIG. 2A in cellular communication with a server, and FIG. 4B illustrates generation of flight data, FD.
FIGS 5A-5B are views of the wireless device of FIG. 2A in short-range wireless communication with other wireless devices within range.
FIG. 6 is a block diagram of a machine that may implement any one of the methods, procedures and functions described herein.

### Detailed Description of Example Embodiments

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements. Like numbers refer to like elements throughout.

Also, it will be understood that, where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more", even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments.

It will furthermore be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure. As used herein, the terms "multiple", "plural" and "plurality" are intended to imply provision of two or more elements, whereas the term "set" is intended to imply a provision of one or more elements. The term "and/or" includes any and all combinations of one or more of the associated listed elements.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

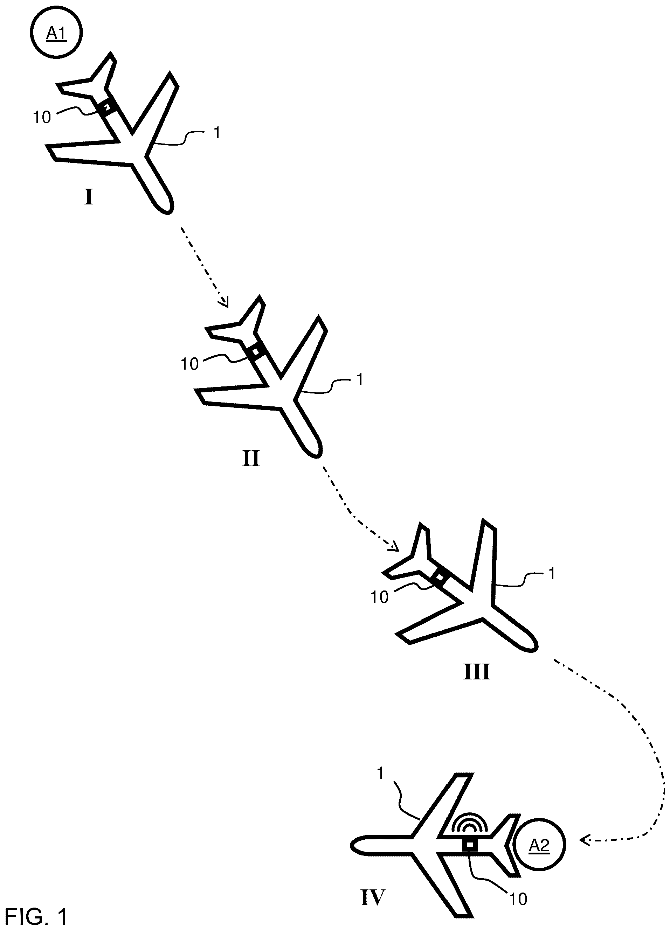

FIG. 1 illustrates a use case of a wireless device in accordance with some embodiments. FIG. 1 shows an aircraft 1 when travelling from a first airport A1 to a second airport A2 and illustrates the aircraft 1 during take-off (I), in-flight (II-III), and after landing (IV). A wireless device 10 is located inside the aircraft 1. As indicated by a transmission symbol, the wireless device 10 operates to intermittently transmit an RF signal over a cellular network when the aircraft 1 has landed at airport A2, but the wireless device 10 refrains from transmitting the RF signal during takeoff and in-flight. Although not shown in FIG. 1, the wireless device 10 may likewise intermittently transmit the RF signal over a cellular network during ground transport to airport A1.

In one example, the wireless device 10 is a cargo-tracking device, also known as a logistics tracker, which is attached to or otherwise combined with goods in transport and configured to transmit its position, optionally together with further measured data such as temperature, pressure, moisture etc., by the RF signals. Such a cargo-tracking device may implement an automated function for detecting one or more dedicated flight events, such as takeoff and landing, and automatically prevent cellular communication upon detection of such a flight event. It may also be desirable to prevent cellular communication in-flight, to conserve battery power.

FIG. 1 is also applicable to a use case in which the wireless device 10 is a smartphone or other electronic equipment carried by a passenger onto the aircraft 1. Such a wireless device 10 may transmit the RF signals as a result of the passenger using the wireless device 10 for accessing the Internet or placing a phone call. To comply with the above-mentioned regulations, passengers are requested by aircraft staff to turn off all electronic equipment during takeoff and landing. To mitigate the risk that this request is overlooked or ignored by passengers, it is envisioned that future smartphones and other electronic equipment may be provided with an automated function similar to the one in cargo-tracking devices.

To perform wireless communication, the wireless device 10 establishes network connectivity with a cellular network. Typically, the connection is made to one of several available subscriber networks that service the physical geo-location of the wireless device 10. If the default cellular network is not available in the physical geo-location of the wireless device 10, it may communicate through a cellular network other than the default network, for example by so-called roaming. The cellular networks are typically, but not necessarily, operated by respective cellular service telephone companies ("operators"). The cellular networks may be operated in the licensed and/or unlicensed frequency spectrum. Exemplary radio access technologies (RATs) for cellular networks include circuit-switched network technologies, including but not limited to, global system for mobile communications (GSM), code division multiple access (CDMA), wideband CDMA (WCDMA), and advanced or alternative versions of these standards, as well as packet-switched network technologies, including but not limited to general packet radio service (GPRS), universal mobile telecommunications system (UMTS), 3G, 4G, 4G long-term evolution (LTE), and 5G NR, and advanced or alternative versions of these standards. It is also conceivable that connection is made in the unlicensed frequency spectrum, for example by use of RATs such as MulteFire, LoRa, Sigfox, etc.

The wireless device 10 may be configured to support a number of different RATs so as to be operable in situations when a particular RAT is not available. Further, the electronic device 10 may be configured to support communication on a plurality of radio frequency bands (RFBs) or channels for each RAT.

The wireless device 10 may be transported by the aircraft 1 over long distances, for example between different countries or continents. After landing, the wireless device may be unable to connect to its default cellular network and may need to perform a full scan of the supported RATs and RFBs to establish a connection to a cellular network. Even if the full scan is interrupted whenever the wireless device 10 is able to connect to a cellular network, the full scan is time consuming and power inefficient. It is desirable to reduce power consumption in wireless devices, in particular wireless devices that are power-limited, for example by being powered by an internal power source, such as a battery or fuel cell.

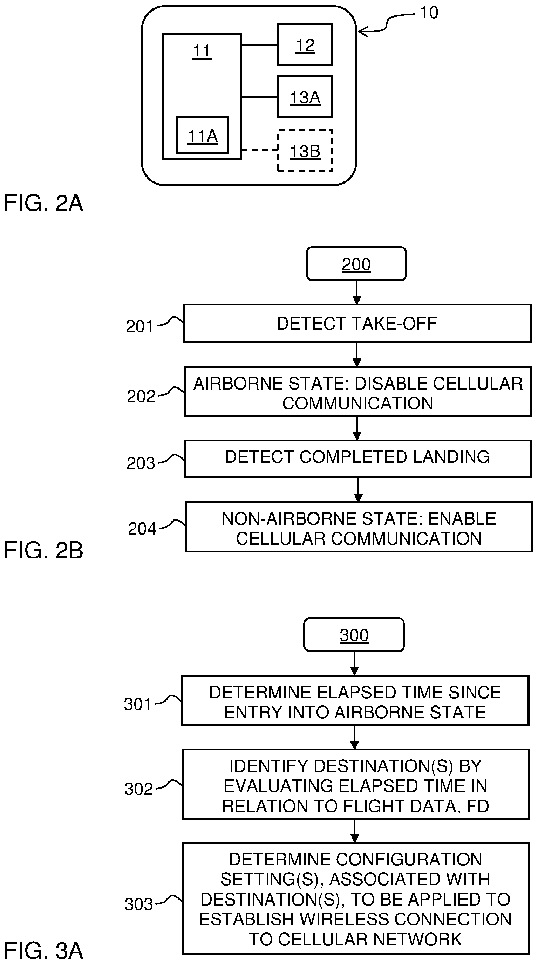

FIG. 2A is a schematic view of an example wireless device 10 in accordance with some embodiments. The wireless device 10 comprises a controller or control unit 11, which is configured to control the overall operation of the wireless device 10. The wireless device 10 further comprises a sensor arrangement or sensor system 12 which is configured to generate sensor data that may be processed, stored or transmitted by the wireless device 10. The wireless device 10 has a first communication system 13A which is configured for cellular communication on a set of supported RATs and RFBs. As indicated, the wireless device 10 may store configuration data 11A, which associates location data and configuration settings for cellular communication. Each configuration setting may identify one or more available RATs and one or more available RFBs for the location data. The configuration data 11A thereby identifies, to the wireless device 10, a configuration setting to be applied by the wireless device 10 at a location matching the location data, to establish a connection to a cellular network. The location data may be given in any suitable format, for example as a geofence, an airport identifier, a region or country identifier, etc.

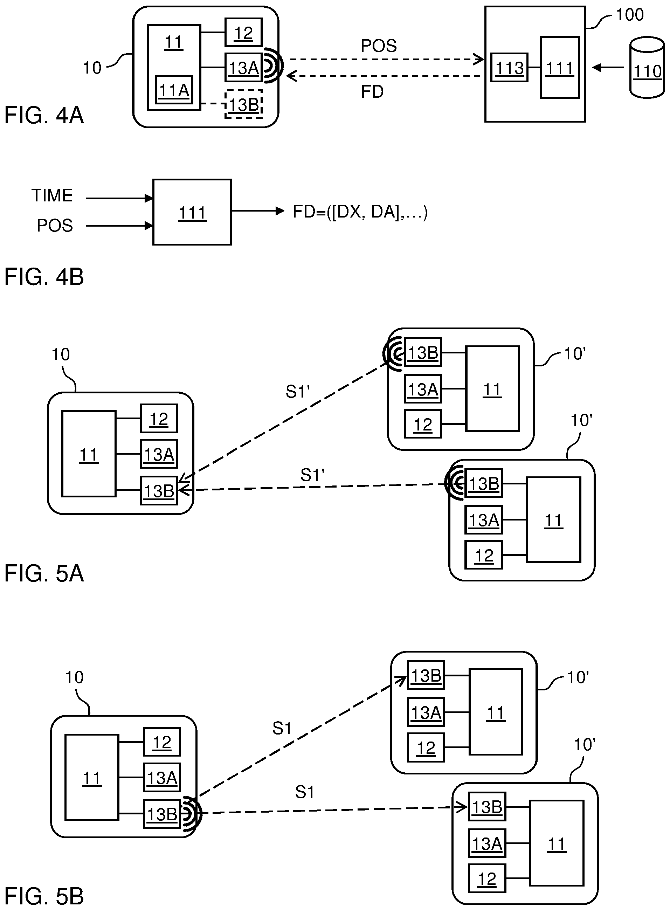

As shown by dashed lines in FIG. 2A, the wireless device 10 may include a second communication system 13B, which is configured for wireless short-range communication, for example by one or more of Bluetooth, BLE, WiFi, LR-WPAN, UWB, ZigBee, Z-Wave, etc. Example use of the communication system 13B will be described further below with reference to FIGS 5A-5B.

The sensor system 12 may include any type of sensor that is conventionally used for detecting takeoff or landing of an aircraft. For example, the sensor system 12 may include one or more of a pressure sensor for sensing ambient pressure, a motion sensor or vibration sensor for sensing own motion, or a sound detector for sensing ambient sound. The pressure sensor may be of any type and may measure ambient pressure (absolute or relative) inside the wireless device 10, 10' or in the surroundings of the wireless device 10, 10'. The motion sensor may be of any type and may measure one or more of acceleration, velocity or orientation, in absolute terms or in one or more directions. The motion sensor may include one or more of an inertial measurement unit (IMU), an accelerometer with any number of axes, a gyroscope, a magnetometer, etc. The vibration sensor may be of any type and may measure mechanical vibrations experienced by wireless device 10, 10', in one or more frequency ranges. In some embodiments, the vibration sensor is tailored to detect mechanical vibrations generated by an aircraft, for example during takeoff or landing. The sound detector may be of any type and may measure the magnitude of sound waves inside or in the surroundings of the wireless device 10, 10', in one or more frequency ranges. In some embodiments, the sound detector is tailored to detect sound that is typical to an operating aircraft, for example during takeoff or landing.

The wireless device 10 in FIG. 2A may be any type of electronic device configured for wireless communication, such as a cargo-tracking device, a mobile phone, a smart phone, a personal digital assistant (PDA), a tablet computer, a laptop computer, an IoT (Internet-of-Things) device, a wearable computer, etc.

FIG. 2B is a flow chart of an example method 200 that may be performed by the wireless device 10 in FIG. 2A to provide the automated function of disabling/enabling cellular communication. In step 201, sensor data from the sensor system 12 is processed to determine if the device 10 is airborne or not. For example, in step 201, the sensor data may be processed to detect one or more characteristic properties of an aircraft during takeoff (cf. I in FIG. 1). Such characteristic properties may include absolute pressure, a change in absolute pressure in relation to a preceding time step, a variability in pressure during a time window, acceleration, velocity, orientation, sound intensity in one or more frequency ranges, vibration intensity in one or more frequency ranges, one or more statistical metrics (mean, standard deviation, RMS, etc.) for acceleration, velocity, orientation, sound intensity, or vibration intensity within a time window, etc.

In step 202, when takeoff is detected in step 201, the wireless device 10 is set in an airborne state, in which cellular communication is disabled. In the airborne state, the wireless device 10 is thus prevented from communicating with any cellular network. In some embodiments, the airborne state corresponds to a conventional "flight mode".

The wireless device 10 is then maintained in the airborne state until it is detected, in step 203, that the device 10 is no longer airborne. For example, in step 203, the sensor data may be processed to detect one or more characteristic properties of an aircraft during and/or after landing. This may be seen to correspond to detecting that landing is completed, which implies that the aircraft is on the ground or is about to touch the ground.

In step 204, when a completed landing is detected in step 203 (cf. IV in FIG. 1), the wireless device 10 is set in a non-airborne state, in which cellular communication is enabled.

FIG. 3A is a flowchart of a method 300 which is performed by the wireless device 10 after entry into the airborne state to prepare the device 10 for connection to a cellular network. The method 300 may be performed while the device 10 is in the airborne state (cf. step 202), or when the device 10 has been switched from the airborne state to the non-airborne state (cf. step 204). In step 301, an elapsed time since the wireless device 10 last entered the airborne state is determined. This effectively corresponds to the time since takeoff of the aircraft that carries the device 10. Step 301 presumes that the device 10 comprises a clock, timer or the like, which is operated to continuously measure the elapsed time from step 202 in FIG. 2B. In step 302, one or more destinations are determined by evaluating the elapsed time in relation to flight data, FD, that associates destinations with aircraft flight durations. The flight data may be at least partly retrieved by the device 10 over a cellular network before the device 10 entered the airborne state. It is understood that step 302 results in one or more potential destinations of the aircraft that carries the device 10. The potential destination may be given in any format, for example as an airport identifier, geographic coordinates, etc. In step 303, one or more configuration settings for the potential destination(s) are determined. Step 303 thereby results in a selection of configuration setting(s) to be subsequently applied to establish a wireless connection to a cellular network. Step 303 presumes that the device 10 is capable of associating destinations with configuration settings. In some embodiments, the determination of the configuration setting(s) in step 303 involves evaluating the respective potential destination in relation to the above-mentioned configuration data 11A (FIG. 2A), which associates location data and configuration settings. The configuration data 11A may be prestored in a memory of the device 10' and/or obtained by communication with a server when the device has established a connection to a cellular network.

It is realized that the example method 300 provides the technical advantage of preparing the wireless device 10 for a connection to a cellular network after air transportation. By the destination-specific selection of configuration setting(s), the need for a full scan of all supported RATs and RFBs is mitigated or obviated. The selected configuration setting(s) will facilitate the connection of the device 10 to a cellular network, since the device 10 only needs to scan the set of available RFBs by use of the available RATs as identified by the configuration setting(s). In some implementations, the method 300 may even allow the device 10 to directly connect to the cellular network. The method 300 will save time and power in the device 10. Further, the device 10 is capable of connecting to the cellular network without manual intervention.

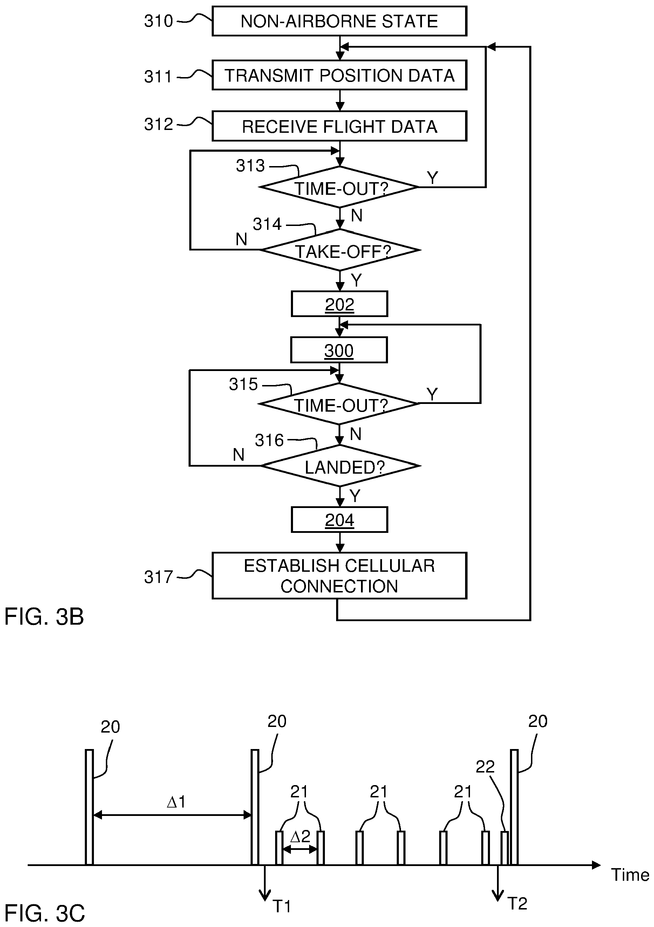

FIG. 3B is a flowchart of an example method of operating a wireless device 10 in accordance with the method 200 in FIG. 2B and the method 300 in FIG. 3A. The method in FIG. 3B will be described with reference to FIG. 3C, which illustrates the timing of operations performed by the device 10.

As indicated by step 310, the method starts with device 10 in the non-airborne state. For example, the device 10 may be in transit by transportation on ground or sea. Steps 311-314 are arranged to operate the device 10 to transmit data at regular intervals and to detect when it is airborne. In the illustrated example, the device 10 is a tracker that transmits position data, for example its current position. Thus, in step 311, position data is transmitted over a cellular network by use of the communication system 13A, for receipt by a logistics server. The position data may be obtained from a positioning system in the device 10, for example a GNSS receiver. In step 312, flight data, FD, is received by use of the communication system 13A from the logistics server or from another server. In FIG. 3C, the data exchange in steps 311, 312 is represented by block 20.

In step 313, the method checks if a first time interval since step 311 has expired. If the first time interval has expired, the method returns to perform step 311. In FIG. 3C, the first interval is designated Δ1 and is the time interval between successive transmissions of position data. It is conceivable that step 312 is also performed at the first time interval, as implied by FIG. 3B, or at another time interval. If the first time interval has not expired in step 313, the method proceeds to step 314. In step 314, which corresponds to step 201 in FIG. 2B, it is determined if the device 10 is airborne or not. If the device is not airborne, the method returns to step 313. On the other hand, if the device is determined to be airborne, for example by detection of a takeoff in step 314, the method proceeds to perform step 202, in which the device 10 is set in the airborne state and cellular communication is disabled. In FIG. 3C, the switch to the airborne state is made at T1.

In some embodiments, the communication system 13A is disconnected from the cellular network during the first time interval, Δ1, to save power. In some embodiments, steps 311 and 312 are performed in rapid succession, with step 311 starting by establishing a connection to the cellular network and step 312 ending by disconnecting from the cellular network. To establish the connection, a current combination of RAT and channel may be applied in step 311. This current combination may be given as a default setting for the device, for connection to a default cellular network, be determined by a previous full scan, or be determined by a previous execution of method 300.

Subsequent to step 202, the method in FIG. 3B operates the device 10 to perform the method 300 at regular intervals and to detect when it is no longer airborne. After step 300, which results in configuration setting(s), the method checks if a second time interval since step 300 has expired, in step 315. If the second time interval has expired, the method returns to perform step 300. In FIG. 3C, the second interval is designated Δ2 and is the time interval between successive executions of step 300, as represented by block 21. If the second time interval has not expired in step 315, the method proceeds to step 316. In step 316, which corresponds to step 203 in FIG. 2B, it is determined if the device 10 is airborne or not. If the device 10 is airborne, the method returns to step 315. On the other hand, if the device is determined not to be airborne, for example by detection of a completed landing in step 316, the method proceeds to perform step 204, in which the device 10 is set in the non-airborne state and cellular communication is enabled. Then, in step 317, the device 10 is connected to the cellular network by use of the configuration setting(s) determined by the latest execution of step 300. In FIG. 3C, the switch to the non-airborne state is made at T2, and steps 204 and 317 are represented by block 22. Subsequent to step 317, the method returns to step 311, in which position data is transmitted, as represented by block 20 in FIG. 3C.

When step 300 is performed while the device 10 is in the airborne state, as exemplified in FIG. 3B, it is likely that step 300 will be repeated during the air transportation, as shown in FIG. 3C. As the elapsed time since takeoff increases, the number of potential destinations is likely to decrease. This implies that the configuration setting(s) determined by step 303 are likely to get more precise over time.

Another advantage of performing step 300 at least once while the device 10 is in the airborne state is that device 10 will be prepared to establish the cellular connection, by use of the configuration setting(s), as soon as it detects a completed landing (by step 203) and is set in the non-airborne state (by step 204). However, in an alternative embodiment, step 300 is instead performed after detection of a completed landing. This has the advantage of reducing power consumption during flight but has the drawback of delaying the connection of the device 10 to the cellular network after landing. In such an alternative embodiment, blocks 21 are removed, and a new block 21 is added between T2 and block 22 in FIG. 3C.

FIG. 4A is a block diagram of the wireless device and a server 100. The server 100 comprises a communication module 113 operable to communicate with the device 10 when the device 10 is connected to a cellular network. The server 100 further comprises a control unit 111. The server 110 is further connected to a local or remote database 110, which stores information about flights from one or more airports. Dashed arrows show data transfer during steps 311 and 312, in accordance with some embodiments. As shown, the device 10 transmits position data, POS, to the server 100, which returns flight data, FD, to the device 10. As explained above, the flight data associates destinations with flight durations. The flight data is provided by the server 100 to be relevant to the position data, POS. For example, the server 100 may identify a nearby airport based on POS and provide FD for this airport. It is conceivable that the server 100 only provides FD for an airport if POS is sufficiently close to the airport. It is also conceivable that the server 100 only provides the same FD once. For example, if a time sequence of received POS from the device 10 are close to the same airport, the server 100 will only transmit FD for this airport once.

The server 100 may obtain the flight data from different sources. In one example, the flight data is representative of flight schedules for aircrafts that depart from an airport given by POS. Alternatively or additionally, FD may be representative of historic flights performed by the wireless device 10 or by other wireless devices from an airport given by POS. For example, a logistics provider may have a database of all flights performed by their trackers, and the server 100 may derive the flight data from such a database.

The flight data may be provided to the device 10 in many different forms. In one example, the flight data is raw data, for example the above-mentioned flight schedules or historic flights. Such raw data is then processed by the device 10 to identify potential destinations in step 302 (FIG. 3A). In another example, the flight data is extracted from flight schedules or historic flights by the server 100 and comprises pairs of durations and destinations. This is illustrated in FIG. 4B, where the control unit 111 of the server 100 uses POS from the device 10 and a time point associated with POS to generate FD comprising pairs of duration (DX) and destination (DA). The time point may be given by the current time when POS is received by the server 100, or by a time stamp that generated by the device 10 and is transmitted together with POS. The flight data may include further data, for example a probability value for each pair [DX, DA]. Such a probability value may be calculated by the server 100, for example based on the historic data, to indicate a likelihood of each destination. The probability value may be used by the device 10 when performing step 302 (FIG. 3A).

Upon receiving FD, the device 10 may store FD in internal memory, for use by method 300. The device 10 may implement a memory management function, which deletes FD from the internal memory according to some logic, for example based on usage and/or residence time. It is also conceivable that the internal memory is preconfigured to store default FD. Such default FD may allow the device 10 to autonomously identify potential destinations based on time and POS.

In some embodiments, the wireless device 10 in included in a group of wireless devices that are all operable to receive FD from a server, and possibly perform method 300 to determine configuration setting(s). In some examples, the group comprises logistics trackers from a specific manufacturer or logistics trackers that are deployed by one or more logistic companies, transportation service providers, etc. In another example, the group comprises smartphones from a specific manufacturer or a specific network operator.

In some embodiments, the wireless devices in such a group of wireless devices are configured to share information related to FD and/or configuration setting(s) by wireless short-range communication. This is a powerful improvement, since it enables wireless devices that are brought within range of each other to obtain, by the sharing, relevant FD and/or configuration setting(s). For example, if a wireless device receives no or incorrect FD from the server before takeoff, it may still receive appropriate FD from another wireless device, before or after takeoff.

FIG. 5A illustrates a wireless device 10 and two other wireless devices 10', which are located within range for short-range wireless communication. As shown, each of the other wireless devices 10' comprises a controller 11, a sensor system 12 and first and second communication systems 13A, 13B. As indicated by transmission symbols, the devices 10' operate their second communication systems 13B to transmit a sharing signal S1', which is received by the second communication system 13B of the wireless device 10. FIG. 5B corresponds to FIG. 5A and shows that the device 10 operates its second communication system 13B to transmit a sharing signal S1, which is received by the second communication systems 13B of the wireless devices 10'. For example, the wireless devices 10, 10' may be logistics trackers which are co-located in a cargo compartment of an aircraft, or smartphones carried by passengers on an aircraft.

In FIG. 5A, the sharing signals S1' may include at least part of the FD stored by the respective device 10'. Alternatively or additionally, the sharing signal S 1 may include at least part of the configuration setting(s) that have been determined by the respective device 10' by method 300. In FIG. 5B, the sharing signal S1 may include at least part of the FD stored by device 10, and/or at least part of the configuration setting(s) determined by method 300 when executed by device 10.

In some embodiments, the wireless devices 10, 10' are configured to broadcast outgoing sharing signals and to listen for incoming sharing signals, in accordance with any scheme. The use of broadcasting allows the respective wireless device to dynamically communicate with any number of other wireless devices within range, without requiring any preceding coordination process, such as pairing. However, in an alternative embodiment, the wireless devices 10, 10' are paired before exchanging sharing signals.

In some embodiments, each of the wireless devices 10, 10' in the group is configured to both transmit and receive sharing signals. However, it is also conceivable that the group includes one or more wireless devices configured to only transmit or receive sharing signals.

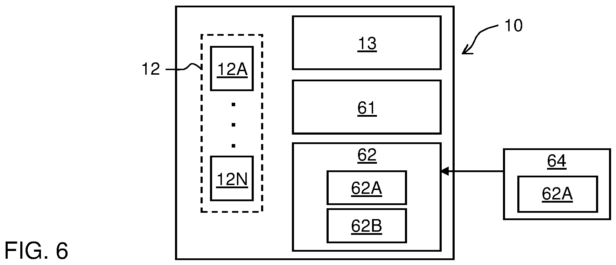

The structures and methods disclosed herein may be implemented by hardware or a combination of software and hardware. In some embodiments, the hardware comprises one or more software-controlled processors. FIG. 6 schematically depicts a wireless device 10, which comprises a sensor system 12 that includes sensors designated by 12A-12N. The wireless device 10 further comprises a processing system 61, computer memory 62, and a wireless communication system 13, which is at least configured for cellular communication (cf. 13A in FIG. 2A). The processing system 61 may include one or more of a CPU ("Central Processing Unit"), a DSP ("Digital Signal Processor"), a GPU ("Graphics Processing Unit"), a microprocessor, a microcontroller, an ASIC ("Application-Specific Integrated Circuit"), a combination of discrete analog and/or digital components, or some other programmable logical device, such as an FPGA ("Field Programmable Gate Array"). A control program 62A comprising computer instructions is stored in the memory 62 and executed by the processing system 61 to implement logic that performs any of the methods, procedures, functions, operations, or steps described in the foregoing. The control program 62A may be supplied to the wireless device 10 on a computer-readable medium 64, which may be a tangible (non-transitory) product (for example, magnetic medium, optical disk, read-only memory, flash memory, etc.) or a propagating signal. As indicated in FIG. 6, the memory 62 may also store control data 62B for use by the processing system 61, such as flight data, configuration setting(s), configuration data (11A in FIG. 2A), definition data for the first and second time intervals (Δ1, Δ2 in FIG. 3C), definition data for encoding and decoding of signals S1, S1', etc.

While the subject of the present disclosure has been described in connection with what is presently considered to be the most practical embodiments, it is to be understood that the subject of the present disclosure is not to be limited to the disclosed embodiments, but on the contrary, is intended to cover various modifications and equivalent arrangements, the invention being defined according to the appended claims.

## Claims

1. A wireless device comprising a communication system (13A) for cellular communication, wherein the communication system (13A) is disabled when the wireless device (10) is in an airborne state, said wireless device further comprising logic (61, 62A) configured to determine an elapsed time since entry of the wireless device into the airborne state, wherein the logic (61, 62A) is further configured to:
identify at least one destination by evaluating the elapsed time in relation to flight data, FD, that associates destinations with aircraft flight durations;
determine, for the at least one destination, a respective configuration setting, which is associated with the at least one destination, to be applied by the communication system (13A) to establish a wireless connection to a cellular network; and
operate the communication system (13A) to apply the respective configuration setting when the wireless device (10) switches from the airborne state to a non-airborne state.

2. The wireless device of claim 1, wherein the respective configuration setting defines one or more available radio access technologies and one or more available radio frequency bands, and wherein the logic (61, 62A) is configured, when operating the communication system (13A) to apply the respective configuration setting, to scan the one or more available radio frequency bands by use of the one or more available radio access technologies.

3. The wireless device of any preceding claim, wherein the logic (61, 62A) is further configured to obtain at least part of the flight data, FD, from a server (100) at a time point before entry into the airborne state.

4. The wireless device of claim 3, wherein the logic (61, 62A) is further configured, when obtaining said at least part of the flight data, FD, to: transmit position data, POS, for the wireless device (10) to the server (100), and receive said at least part of the flight data, FD, from the server (100) in response to the position data, POS.

5. The wireless device of claim 3 or 4, wherein said at least part of the flight data, FD, is representative of flight schedules for aircrafts that depart from an airport which is identifiable from the position data, POS, or historic flights performed from the airport by the wireless device and/or at least one further wireless device (10').

6. The wireless device of any one of claims 3-5, wherein the logic (61, 62A) is configured to obtain said at least part of the flight data, FD, by cellular communication with the server (100) via the communication system (13A) and/or from a memory (62) in the wireless device.

7. The wireless device of any preceding claim, which further comprises a communication system (13B) for short-range wireless communication, wherein the logic (61, 62A) is further configured to operate the communication system (13B) for short-range wireless communication to receive at least a subset of the flight data, FD, from one or more further wireless devices (10').

8. The wireless device of claim 7, wherein the logic (61, 62A) is further configured to operate the communication system (13B) for short-range wireless communication to transmit the flight data, FD, a subset thereof, or the respective configuration setting.

9. The wireless device of claim 7 or 8, wherein the logic (61, 62A) is configured to operate the communication system (13B) for short-range wireless communication to receive and/or transmit when the wireless device (10) is in the airborne state.

10. The wireless device of any preceding claim, which comprises configuration data (11A) which associates destinations with configuration settings, wherein the logic (61, 62A) is configured to evaluate the at least one destination in relation to the configuration data (11A) to determine the respective configuration setting.

11. The wireless device of any preceding claim, wherein the wireless device (10) further comprises a sensor system (12), wherein the logic (61, 62A) is further configured to: process sensor data provided by the sensor system (12) to determine if the wireless device (10) is airborne or not, and selectively set the wireless device (10) in the airborne state or the non-airborne state based on the processing of the sensor data.

12. The wireless device of claim 11, wherein the sensor data is representative of one or more of ambient pressure at the wireless device, own motion of the wireless device, or ambient sound at the wireless device.

13. A method performed by a wireless device (10) comprising a communication system (13A) for cellular communication, wherein the communication system (13A) is disabled when the wireless device (10) is in an airborne state, said method comprising determining (301) an elapsed time since entry of the wireless device (10) into the airborne state, said method further comprising:
identifying (302) at least one destination by evaluating the elapsed time in relation to flight data, FD, that associates destinations with aircraft flight durations;
determining (303), based on the at least of destination, a respective configuration setting, which is associated with the at least one destination, to be applied by the communication system (13A) to establish a wireless connection to a cellular network; and
operating (317) the communication system to apply the respective configuration setting when the wireless device switches from the airborne state to a non-airborne state.

14. A computer-readable medium comprising instructions which, when installed on a processing system (61), causes the processing system (61) to perform the method of claim 13.

## Patentansprüche

1. Drahtlose Vorrichtung, umfassend ein Kommunikationssystem (13A) für eine Mobilfunkkommunikation, wobei das Kommunikationssystem (13A) deaktiviert ist, wenn die drahtlose Vorrichtung (10) in einem in der Luft befindlichen Zustand ist, wobei die drahtlose Vorrichtung ferner eine Logik (61, 62A) umfasst, die konfiguriert ist, um eine verstrichene Zeit seit einem Eintritt der drahtlosen Vorrichtung in den in der Luft befindlichen Zustand zu bestimmen, wobei die Logik (61, 62A) ferner konfiguriert ist zum:
Identifizieren mindestens eines Ziels durch Auswerten der verstrichenen Zeit in Bezug auf Flugdaten, FD, die Ziele mit Luftfahrzeugflugdauern verknüpfen;
Bestimmen, für das mindestens eine Ziel, einer jeweiligen Konfigurationseinstellung, die mit dem mindestens einen Ziel verknüpft ist, die durch das Kommunikationssystem (13A) anzuwenden ist, um eine drahtlose Verbindung zu einem Mobilfunknetz herzustellen; und
Betreiben des Kommunikationssystems (13A), um die jeweilige Konfigurationseinstellung anzuwenden, wenn die drahtlose Vorrichtung (10) von dem in der Luft befindlichen Zustand in einen nicht in der Luft befindlichen Zustand wechselt.

2. Drahtlose Vorrichtung nach Anspruch 1, wobei die jeweilige Konfigurationseinstellung eine oder mehrere verfügbare Funkzugangstechnologien und ein oder mehrere verfügbare Funkfrequenzbänder definiert, und wobei die Logik (61, 62A) konfiguriert ist, wenn sie das Kommunikationssystem (13A) betreibt, um die jeweilige Konfigurationseinstellung anzuwenden, um das eine oder die mehreren verfügbaren Funkfrequenzbänder unter Verwendung der einen oder der mehreren verfügbaren Funkzugangstechnologien zu scannen.

3. Drahtlose Vorrichtung nach einem der vorstehenden Ansprüche, wobei die Logik (61, 62A) ferner konfiguriert ist, um mindestens einen Teil der Flugdaten, FD, von einem Server (100) zu einem Zeitpunkt vor dem Eintritt in den in der Luft befindlichen Zustand zu erhalten.

4. Drahtlose Vorrichtung nach Anspruch 3, wobei die Logik (61, 62A) ferner konfiguriert ist, wenn sie den mindestens einen Teil der Flugdaten, FD, erhält, zum: Übertragen von Positionsdaten, POS, für die drahtlose Vorrichtung (10) an den Server (100) und Empfangen des mindestens einen Teils der Flugdaten, FD, von dem Server (100) als Reaktion auf die Positionsdaten, POS.

5. Drahtlose Vorrichtung nach Anspruch 3 oder 4, wobei der mindestens eine Teil der Flugdaten, FD, repräsentativ für Flugpläne für Luftfahrzeuge ist, die von einem Flughafen abfliegen, der von den Positionsdaten, POS, oder historischen Flügen, die von dem Flughafen durchgeführt wurden, durch die drahtlose Vorrichtung und/oder mindestens eine weitere drahtlose Vorrichtung (10') identifizierbar ist.

6. Drahtlose Vorrichtung nach einem der Ansprüche 3 bis 5, wobei die Logik (61, 62A) konfiguriert ist, um den mindestens einen Teil der Flugdaten, FD, durch die Mobilfunkkommunikation mit dem Server (100) über das Kommunikationssystem (13A) und/oder von einem Speicher (62) in der drahtlosen Vorrichtung zu erhalten.

7. Drahtlose Vorrichtung nach einem der vorstehenden Ansprüche, die ferner ein Kommunikationssystem (13B) für eine drahtlose Kommunikation mit kurzer Reichweite umfasst, wobei die Logik (61, 62A) ferner konfiguriert ist, um das Kommunikationssystem (13B) für die drahtlose Kommunikation mit kurzer Reichweite zu betreiben, um mindestens eine Untermenge der Flugdaten, FD, von einer oder mehreren weiteren drahtlosen Vorrichtungen (10') zu empfangen.

8. Drahtlose Vorrichtung nach Anspruch 7, wobei die Logik (61, 62A) ferner konfiguriert ist, um das Kommunikationssystem (13B) für die drahtlose Kommunikation mit kurzer Reichweite zu betreiben, um die Flugdaten, FD, eine Untermenge davon oder die jeweilige Konfigurationseinstellung zu übertragen.

9. Drahtlose Vorrichtung nach Anspruch 7 oder 8, wobei die Logik (61, 62A) konfiguriert ist, um das Kommunikationssystem (13B) für die drahtlose Kommunikation mit kurzer Reichweite zu betreiben, um zu empfangen und/oder übertragen, wenn die drahtlose Vorrichtung (10) in dem in der Luft befindlichen Zustand ist.

10. Drahtlose Vorrichtung nach einem der vorstehenden Ansprüche, die Konfigurationsdaten (11A), die Ziele mit Konfigurationseinstellungen verknüpfen, umfasst, wobei die Logik (61, 62A) konfiguriert ist, um das mindestens eine Ziel in Bezug auf die Konfigurationsdaten (11A) auszuwerten, um die jeweilige Konfigurationseinstellung zu bestimmen.

11. Drahtlose Vorrichtung nach einem der vorstehenden Ansprüche, wobei die drahtlose Vorrichtung (10) ferner ein Sensorsystem (12) umfasst, wobei die Logik (61, 62A) ferner konfiguriert ist zum: Verarbeiten von Sensordaten, die durch das Sensorsystem (12) bereitgestellt werden, um zu bestimmen, ob die drahtlose Vorrichtung (10) in der Luft befindlich ist oder nicht, und die drahtlose Vorrichtung (10) in den in der Luft befindlichen Zustand oder den nicht in der Luft befindlichen Zustand basierend auf der Verarbeitung der Sensordaten selektiv einzustellen.

12. Drahtlose Vorrichtung nach Anspruch 11, wobei die Sensordaten repräsentativ für eines oder mehrere von einem Umgebungsdruck an der drahtlosen Vorrichtung, einer eigenen Bewegung der drahtlosen Vorrichtung oder einem Umgebungsgeräusch an der drahtlosen Vorrichtung sind.

13. Verfahren, das durch eine drahtlose Vorrichtung (10) durchgeführt wird, umfassend ein Kommunikationssystem (13A) für die Mobilfunkkommunikation, wobei das Kommunikationssystem (13A) deaktiviert ist, wenn die drahtlose Vorrichtung (10) in einem in der Luft befindlichen Zustand ist, das Verfahren umfassend das Bestimmen (301) einer verstrichenen Zeit seit dem Eintritt der drahtlosen Vorrichtung (10) in den in der Luft befindlichen Zustand, das Verfahren ferner umfassend:
Identifizieren (302) mindestens eines Ziels durch Auswerten der verstrichenen Zeit in Bezug auf Flugdaten, FD, die Ziele mit Luftfahrzeugflugdauern verknüpfen;
Bestimmen (303), basierend auf dem mindestens einen Ziel, einer jeweiligen Konfigurationseinstellung, die mit dem mindestens einen Ziel verknüpft ist, die durch das Kommunikationssystem (13A) anzuwenden ist, um eine drahtlose Verbindung zu einem Mobilfunknetz herzustellen; und
Betreiben (317) des Kommunikationssystems, um die jeweilige Konfigurationseinstellung anzuwenden, wenn die drahtlose Vorrichtung von dem in der Luft befindlichen Zustand in einen nicht in der Luft befindlichen Zustand wechselt.

14. Computerlesbares Medium, umfassend Anweisungen, die, wenn sie auf einem Verarbeitungssystem (61) installiert sind, das Verarbeitungssystem (61) veranlassen, das Verfahren nach Anspruch 13 durchzuführen.

## Revendications

1. Dispositif sans fil comprenant un système de communication (13A) destiné à une communication cellulaire, dans lequel le système de communication (13A) est désactivé lorsque le dispositif sans fil (10) est dans un état aéroporté, ledit dispositif sans fil comprenant en outre une logique (61, 62A) configurée pour déterminer un temps écoulé depuis l'entrée du dispositif sans fil dans l'état aéroporté, dans lequel la logique (61, 62A) est en outre configurée pour :
identifier au moins une destination en évaluant le temps écoulé par rapport aux données de vol, FD, qui associent des destinations aux durées de vol d'aéronef ;
déterminer, pour l'au moins une destination, un réglage de configuration respectif, qui est associé à l'au moins une destination, à appliquer par le système de communication (13A) pour établir une connexion sans fil à un réseau cellulaire ; et
faire fonctionner le système de communication (13A) pour appliquer le réglage de configuration respectif lorsque le dispositif sans fil (10) passe de l'état aéroporté à un état non aéroporté.

2. Dispositif sans fil selon la revendication 1, dans lequel le réglage de configuration respectif définit une ou plusieurs technologies d'accès radio disponibles et une ou plusieurs bandes de fréquences radio disponibles, et dans lequel la logique (61, 62A) est configurée, lors du fonctionnement du système de communication (13A) pour appliquer les réglages de configuration respectifs, pour balayer la ou les bandes de fréquences radio disponibles au moyen de la ou des technologies d'accès radio disponibles.

3. Dispositif sans fil selon l'une quelconque revendication précédente, dans lequel la logique (61, 62A) est en outre configurée pour obtenir au moins une partie des données de vol, FD, à partir d'un serveur (100) à un point temporel avant l'entrée dans l'état aéroporté.

4. Dispositif sans fil selon la revendication 3, dans lequel la logique (61, 62A) est en outre configurée, lors de l'obtention desdites au moins une partie des données de vol, FD, pour : transmettre des données de position, POS, pour le dispositif sans fil (10) au serveur (100), et recevoir ladite au moins une partie des données de vol, FD, à partir du serveur (100) en réponse aux données de position, POS.

5. Dispositif sans fil selon la revendication 3 ou 4, dans lequel ladite au moins une partie des données de vol, FD, représente des planifications de vol pour des aéronefs qui partent d'un aéroport qui est identifiable à partir des données de position, POS, ou des vols historiques effectués depuis l'aéroport par le dispositif sans fil et/ou au moins un dispositif sans fil (10') supplémentaire.

6. Dispositif sans fil selon l'une quelconque des revendications 3 à 5, dans lequel la logique (61, 62A) est configurée pour obtenir ladite au moins une partie des données de vol, FD, par communication cellulaire avec le serveur (100) par l'intermédiaire du système de communication (13A) et/ou à partir d'une mémoire (62) dans le dispositif sans fil.

7. Dispositif sans fil selon l'une quelconque revendication précédente, qui comprend en outre un système de communication (13B) pour une communication sans fil à courte portée, dans lequel la logique (61, 62A) est en outre configurée pour faire fonctionner le système de communication (13B) pour une communication sans fil à courte portée pour recevoir au moins un sous-ensemble des données de vol, FD, à partir d'un ou plusieurs dispositifs sans fil (10') supplémentaires.

8. Dispositif sans fil selon la revendication 7, dans lequel la logique (61, 62A) est en outre configurée pour faire fonctionner le système de communication (13B) pour une communication sans fil à courte portée pour transmettre les données de vol, FD, un sous-ensemble de celles-ci, ou le réglage de configuration respectif.

9. Dispositif sans fil selon la revendication 7 ou 8, dans lequel la logique (61, 62A) est configurée pour faire fonctionner le système de communication (13B) pour une communication sans fil à courte portée pour recevoir et/ou transmettre lorsque le dispositif sans fil (10) est dans l'état aéroporté.

10. Dispositif sans fil selon l'une quelconque revendication précédente, qui comprend des données de configuration (11A) qui associent des destinations à des réglages de configuration, dans lequel la logique (61, 62A) est configurée pour évaluer l'au moins une destination par rapport aux données de configuration (11A) pour déterminer le réglage de configuration respectif.

11. Dispositif sans fil selon l'une quelconque revendication précédente, dans lequel le dispositif sans fil (10) comprend en outre un système de capteur (12), dans lequel la logique (61, 62A) est en outre configurée pour : traiter des données de capteur fournies par le système de capteur (12) pour déterminer si le dispositif sans fil (10) est aéroporté ou non, et régler sélectivement le dispositif sans fil (10) dans l'état aéroporté ou l'état non aéroporté sur la base du traitement des données de capteur.

12. Dispositif sans fil selon la revendication 11, dans lequel les données de capteur représentent un ou plusieurs parmi une pression ambiante au niveau du dispositif sans fil, un mouvement propre du dispositif sans fil, ou un son ambiant au niveau du dispositif sans fil.

13. Procédé effectué par un dispositif sans fil (10) comprenant un système de communication (13A) destiné à une communication cellulaire, dans lequel le système de communication (13A) est désactivé lorsque le dispositif sans fil (10) est dans un état aéroporté, ledit procédé comprenant la détermination (301) d'un temps écoulé depuis l'entrée du dispositif sans fil (10) dans l'état aéroporté, ledit procédé comprenant en outre :
l'identification (302) d'au moins une destination en évaluant le temps écoulé par rapport aux données de vol, FD, qui associent des destinations aux durées de vol d'aéronef ;
la détermination (303), sur la base de l'au moins une destination, d'un réglage de configuration respectif, qui est associé à l'au moins une destination, à appliquer par le système de communication (13A) pour établir une connexion sans fil à un réseau cellulaire ; et
le fait de faire fonctionner (317) le système de communication pour appliquer les réglages de configuration respectifs lorsque le dispositif sans fil passe de l'état aéroporté à un état non aéroporté.

14. Support lisible par ordinateur comprenant des instructions qui, lorsqu'elles sont installées sur un système de traitement (61), amènent le système de traitement (61) à effectuer le procédé selon la revendication 13.
